# EUROPEAN PATENT APPLICATION

(11) **EP 1 101 526 A2**
(43) Date of publication of application: **23.05.2001**
(21) Application number: 00125025.7
(22) Date of filing: 16.11.2000
(51) Int. Cl.: B01J 10/00, B01J 19/18

(54) **Batch reactor with on-demand supply of reactive gas**

(30) Priority: 17.11.1999 US 441516
(71) Applicant: PRAXAIR TECHNOLOGY, INC., Danbury, CT 06810-5113 (US)
(72) Inventor: Williams, William Robert, New Fairfield, Connecticut 06812 (US); Kwamya, John David, Fishkill, New York 12524 (US); Altmann, Howard Wayne, Brookfield, Connecticut 06804-1309 (US); Sweeney, Joshua Brien, Katonah, New York 10536 (US)
(74) Representative: Schwan, Ivo, Dipl.-Ing. (FH)

(57) **Abstract**

A method and apparatus for batch liquid-gas reactions wherein substantially all the reactive gas is utilized in the reaction such that continuous venting of the reaction vessel is not required is disclosed. When venting the reaction vessel upon substantial completion of the reaction, the vent gas does not contain a significant amount of the reactive gas.

## Description

### BACKGROUND OF THE INVENTION

### Field of the Invention

The present invention is directed to a method and apparatus for liquid-gas reactions wherein substantially all of the reactive gas is utilized in the reaction and continuous venting of the reaction vessel is not required.

### Description of Related Art

Liquid-gas reactions and reactors are employed for a variety of practical commercial applications, particularly the preparation of oxygenated products from organic liquids by reaction with air, pure oxygen or mixtures thereof. Typical liquid-gas operations are carried out in tanks or towers where the reactive gas is bubbled in near the bottom of the tank. Mechanical agitation is used to improve the liquid-gas mass transfer, to improve heat exchange, and/or to maintain solid catalysts in suspension in the reaction mixture. The reactive gas reacts directly with the liquid when in bubble form or dissolves in the liquid and then reacts, or undergoes a combination of activities. Unreacted gas may be re-circulated within the liquid to some extent by the mechanical agitation.

Typical prior art reaction vessels require continuous venting during the reaction so that unreacted gases, either the reactive gas or the inerting gas, i.e. nitrogen, do not accumulate.
Continuous venting of the reaction vessel also discharges any reactive gas present in the headspace of the vessel above the liquid level which leads to low gas utilization. Thus, the use of considerably more reactive gas and inerting gas are required for optimal reaction yields.

Another problem associated with the continuous venting is the costly disposal of the vent gas particularly where vent gas condensation systems or incineration is used to rid the vent of solvents. Trace components of solvent must be treated since they are often air pollutants. Oftentimes in small scale reactions, treating the vent gas continuously is uneconomical since there is only a small amount. However, if enough vent gas were stored, a larger more efficient downstream process may be run intermittently as enough vent gas waste becomes available.

For processes where the solvent has low volatility, the vapor pressure is often insufficient to exceed the lower explosive limit. In cases where the solvent has low volatility, the reaction may be run by pressurizing the headspace with the reactive gas and running the reaction as in an Advanced Gas Reactor such as that disclosed in U.S. Patent No. 4,454,077 (Litz). However, the presence of mists in the headspace may make the headspace flammable, despite the fact that it is not above the explosive limit.

Bearing in mind the problems and deficiencies of the prior art, it is therefore an object of the present invention to provide a method of and apparatus for running liquid-gas reactions which does not require continuous venting of the reaction vessel.

It is another object of the present invention to provide a method of and apparatus for running liquid-gas reactions having increased utilization of the reactive gas for increased reaction yield.

A further object of the invention is to provide a method of providing a more efficient and economical waste gas treatment.

It is yet another object of the present invention to provide a method and apparatus for preventing mist formation in a liquid-gas reaction vessel such that there is a reduction in the explosion risk.

Still other objects and advantages of the invention will in part be obvious and will in part be apparent from the specification.

### Summary of the Invention

The present invention is directed to, in a first aspect, a batch liquid-gas reaction process comprising the steps of: (a) providing a desired amount of liquid into a reaction vessel; (b) providing a fixed amount of gas into the reaction vessel; and (c) agitating the liquid in a substantially closed process such that the gas and the liquid are in intimate contact for substantial reaction to occur without venting the gas during the process. The method may further include the step of venting the reaction vessel to release a waste gas substantially free of the fixed amount of gas. As the reaction proceeds, the method may further include the steps of opening the reaction vessel, providing an additional amount of the gas during step (c), and continuing the substantially closed process. A fixed amount of an inert gas may be provided to create an inert atmosphere above the liquid.

In another aspect, the present invention is directed to a batch liquid oxidation reaction process comprising the steps of (a) providing a desired amount of liquid into a reaction vessel; (b) providing a fixed amount of oxygen gas in the reaction vessel; and (c) agitating the liquid in a substantially closed process such that the liquid and the oxygen gas are in intimate contact for substantial oxidation to occur without venting the oxygen gas during the process. Again, a fixed amount of an inert gas may be provided to create an inert atmosphere above the liquid. The process may further include the step of venting the reaction vessel to release a waste stream which is substantially free of the oxygen gas.
In yet another aspect, the present invention is directed to a method of handling waste gas from a liquid-gas reaction comprising the steps of providing a desired amount of liquid into a substantially closed reaction vessel; providing a fixed amount of gas into the reaction vessel; reacting essentially all of the gas with the liquid in a substantially closed process; and venting the reaction vessel to release a waste gas substantially free of any unreacted amount of the gas. In still another aspect, the present invention is directed to a batch reactor for liquid-gas reactions comprising a vessel having an opening for introducing and removing a liquid and a gas; an agitator within the vessel adapted to intimately mix a liquid and a gas introduced into the vessel; and a baffle having at least one aperture disposed over said agitator within said vessel, said baffle adapted to allow gas ingestion directly from a head space above a liquid level in said vessel and re-circulation of any unreacted gas or a by-product gas formed during a liquid-gas reaction process.

In a further aspect, the present invention is directed to an apparatus for liquid-gas reactions comprising: a vessel having an opening for introducing and removing a liquid and a gas; a hollow shaft extending into the vessel having an inlet located adjacent a top portion of the vessel, the inlet adapted to be above a liquid level during the liquid-gas reaction; an agitator within the vessel for intimately mixing a liquid and a gas, the agitator attached to an end of the hollow shaft opposite the inlet; one or more eductor tubes extending from the hollow shaft adjacent the agitator; and a baffle disposed over the agitator in the vessel surrounding the hollow shaft such that during a liquid-gas reaction any unreacted gas or by-product gas escaping through the baffle into a headspace of the vessel above a liquid is re-circulated during agitation of the agitator through the inlet of the hollow shaft and out through the eductor tubes to react with the liquid.

Preferably, the baffle has one or more apertures which may be stationarily mounted within the reaction vessel or wherein the baffle floats on a surface of a liquid within the vessel. Another embodiment includes a baffle having variable openings on its surface. The apparatus may further include a holding tank for waste gas vented from the vessel after a batch liquid-gas reaction, the holding tank adapted to store the waste gas for further processing. Preferably the apparatus further includes a controller adapted to opening the vessel, providing an additional amount of the gas and continuing the substantially closed process. Most preferably, the controller is adapted to detecting a decrease in a pressure within the vessel upon substantial consumption of a gas, maintaining the pressure within the vessel by providing an additional amount of the gas into the vessel and continuing the substantially closed process.

For the purposes of this application, references to "oxygen" or "oxygen gas" means a gas containing greater than 21 vol.% oxygen (e.g. oxygen enriched air).

### Brief Description of the Drawings

The features of the invention believed to be novel and the elements characteristic of the invention are set forth with particularity in the appended claims. The figures are for illustration purposes only and are not drawn to scale. The invention itself, however, both as to organization and method of operation, may best be understood by reference to the detailed description which follows taken in conjunction with the accompanying drawings in which:
Fig. 1 is a cross-sectional view of a preferred embodiment of a reactor in accordance with the present invention.
Fig. 1A is a top plan view of a variation of the annular baffle used in the preferred embodiment of the reactor illustrated in Fig. 1.
Fig. 2 is a cross-sectional view of another preferred embodiment of a reactor in accordance with the present invention.
Fig. 3 is a top plan view of a first preferred embodiment of the baffle in accordance with the present invention.
Fig. 4 is a top plan view of another preferred embodiment of the baffle in accordance with the present invention.
Fig. 5 is a top plan view of yet another preferred embodiment of the baffle in accordance with the present invention.

### Description of the Preferred Embodiment(s)

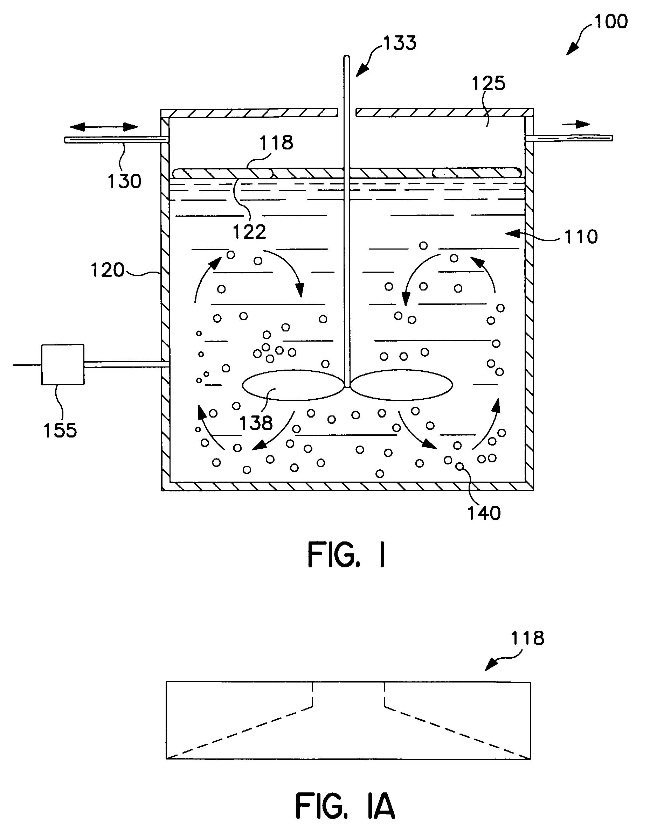

In describing the preferred embodiment of the present invention, reference will be made herein to Figs. 1-5 of the drawings in which like numerals refer to like features of the invention. Features of the invention are not necessarily shown to scale in the drawings.

The present invention is directed to a liquid-gas reaction process and apparatus which does not require continuous venting and wherein very little gas leaves the liquid unreacted. The apparatus of the present invention provides continuous re-circulation of the reactive gas which may have escaped to a head space above the liquid in the reaction vessel, back into a reaction zone below the liquid level such that a fixed amount of a gas charged into the reaction vessel is essentially consumed in a substantially closed liquid-gas reaction process. Thus, when venting the reaction vessel upon completion of the reaction, the vent gas does not contain a significant amount of the reactive gas allowing for more economical waste treatment.
Fig. 1 illustrates a reactor 100 which is preferably used to practice a method of the present invention. In Fig. 1, the reactor 100 comprises a reaction vessel 120 having one or more inlet/outlets 130 to provide a means for introducing a reactive gas 140 and a liquid 110 into the reaction vessel. Agitator 133 is employed to cause re-circulation of reactive gas 140 within liquid 110 by an impeller means 138 which is preferably adapted to facilitate the downward flow of the liquid-gas reaction mixture as shown by the arrows in the reaction vessel 120. A controller 155 may be further included as a means for monitoring the reaction and for adding additional amounts of reactive gas 140 into reaction vessel 120. Headspace 125 is the space above the liquid level 122 to which any unreacted portions of the reactive gas and by-product gases formed from the liquid-gas reaction may escape.
Unexpectedly, the annular shape of baffle 118 allows the re-circulation of the unreacted portions of reactive gas 140 back into liquid 110 while minimizing mist formation within headspace 125. As impeller means 138 of agitator 133 provides the downward flow of liquid 110, a suction is also created within headspace 125 which will draw any gases in headspace 125 back into liquid 110. Impeller means 138 is preferably a helical impeller with a single or multiple helix configuration wherein the leading edges are at an angle and may be enclosed in a draft tube. Other axial flow impellers such as marine impellers or radial impellers may also be used. These impellers are known in the art. By-product gases which are formed during the reaction may also be drawn back into liquid 110, however, reactive gas 140 has another opportunity to react with liquid 110 which increases reactive gas utilization and improved reaction yields.

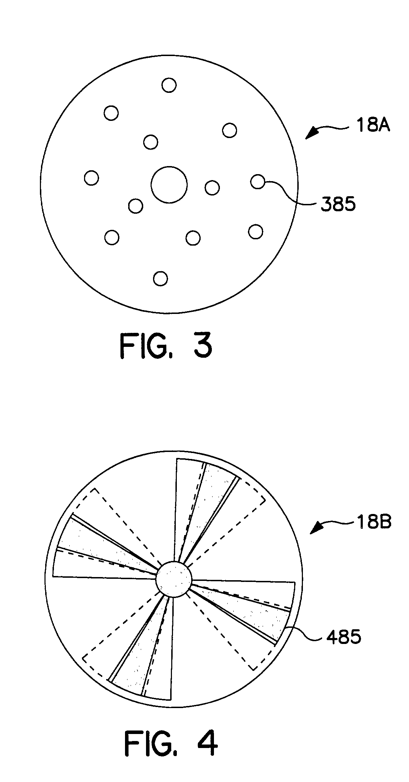

Baffle 118 comprises a substantially horizontal partition within reaction vessel 120 desirably positioned either fixedly mounted within the reaction vessel or allowed to float atop the liquid. Preferably, baffle 118 is shaped with respect to the re-circulating stream of liquid and dispersed gas bubbles, so as to obviate the accumulation of individual gas bubbles under the baffle in excess of about 2cm³ in volume, preferably in excess of about 1 cm³. Most preferably, the underside of baffle 118 is conical and tapered towards the aperture as shown in Fig. 1A. The taper further enhances the flow of any gas bubbles which may be trapped beneath the baffle. Essentially all of the ingested gas and the liquid below the baffle are advantageously involved in the desired liquid-gas mixing and re-circulation operation. It will also be appreciated by one of skill in the art that the opening or openings in the baffle can be varied, as shown in Figs. 3, 4 and 5 and discussed below, depending upon the requirements of the given application to provide improved gas utilization and which may also include means for educing the gas into the liquid. In this manner, the gas and liquid reactants can be mixed and re-circulated without appreciable loss of gas to the headspace above the liquid level in the reaction vessel. The baffle may be stationarily mounted within the reaction vessel or may float on the liquid within the vessel.

As the liquid-gas reaction proceeds in reactor 100, there is typically a drop in pressure within the substantially closed vessel as the reactive gas is consumed. Additional reactive gas may be added manually to the reaction vessel 120 or the reactor may further include a controller 155. Controller 155 may be programmed to detect the drop in pressure, provide for the addition of reactive gas and re-seal the reaction vessel. The controller may be programmed such that the gas is provided on demand due to the pressure of the vessel dropping below a predetermined threshold. The controller could also provide the inert gas on demand as needed during the course of the reaction. Controllers of this type are well known in the art and easily adapted to the task at hand.

Upon substantial completion of the reaction, the reaction vessel is vented preferably into a holding tank for subsequent treatment of the waste gas. Given the high utilization of the reactive gas during the reaction, there typically would be an insignificant amount of reactive gas vented. Such low levels of the waste gas may permit accumulation of the waste gas for more economical waste treatment. The reduction in mist formation by using baffle also reduces the amount of solvent vapor in the waste gas.

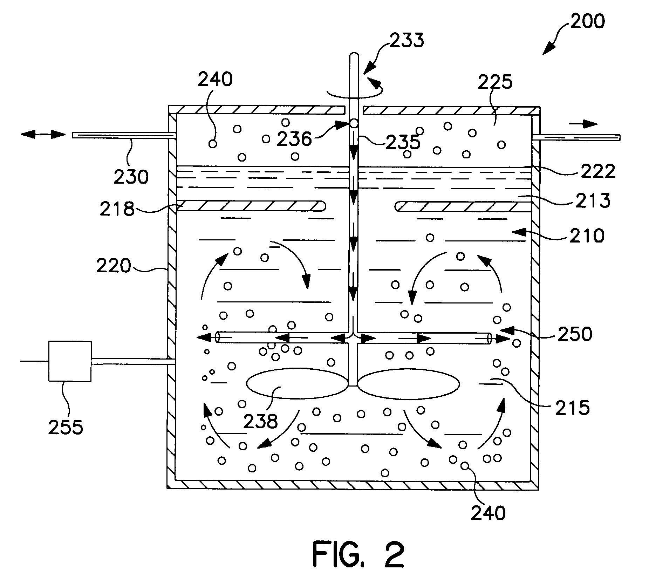

In another preferred embodiment of the invention, reactor 200 as illustrated in Fig. 2, comprises a reaction vessel 220 is filled with a liquid 210. A baffle 218 is disposed within reaction vessel 220 such that upon filling the reaction vessel 220 with a liquid 210, a reaction zone 215 is formed below baffle 218 and a quiescent portion 213 of liquid, if any, is formed above baffle 218. Baffle 218 may be positioned below the liquid-gas interface 222 as shown in Fig. 2 or baffle 218 may float on liquid 210 as shown in Fig. 1. Headspace 225 may be sparged with nitrogen or another inert gas to provide an inert atmosphere during the reaction process. One or more inlet/outlets 230 are provided to access reaction vessel 220 which may also provide a means for introducing the gas and the liquid into reaction vessel 220.

Agitator 233 is employed to cause re-circulation of liquid 210 within reaction zone 220. The baffle 218 inhibits mist formation of liquid 210 in headspace 225 when engaging agitator 233. Agitator 233 has a hollow shaft 235 connected at one end to a suitable driving means (not shown) and at the other end with impeller means 238 which are preferably adapted to cause a downward vertical flow pattern of liquid 210.

The embodiment of Fig. 2 incorporates the use of eductor tubes 250 to react substantially all of reactive gas 240 with liquid 210. Inlet 236 is incorporated into hollow shaft 235 such that the baffled system of the present invention may better educt gas 240 which has escaped into headspace 225. Eductor tubes 250 extend horizontally into reaction zone 215 of liquid 210 from shaft 235. Shaft 235 has an inlet 236 located above the liquid-gas interface 222 with accessibility to headspace 225 through inlet 236. The eductor tubes 250 may have a length up to just smaller than the diameter of reaction vessel 220 and are preferably located just above impellers 238. Eductor tubes of varying cross-section may be positioned along shaft 235.

By engaging agitator 233, impellers 238 create a downward vortex of the liquid and the gas bubbles 240 within reaction zone 215. The suction created by impellers 238 draws any gas in headspace 225 toward shaft 235, into eductor tubes 250 and into the reaction zone 215 as shown by the arrows in Fig. 2. It is preferable that the eductor tubes be placed in a high agitation region to maximize suction. Thus, any gas 240 which may escape into headspace 225 is recirculated into reaction zone 215 through eductor tubes 250.

During operation of the liquid-gas reactor 200, reaction vessel 220 is filled with a desired amount of liquid. A reactive gas 240 may be introduced into reaction vessel 220 by an inlet located either below the liquid-gas interface 222, preferably bubbled into the reaction zone 215, or sparged into headspace 225. Once the reaction vessel 220 is filled with the desired liquid and gas, reaction vessel 220 is substantially closed and sealed from the surrounding environment resulting in a true batch process where neither the liquid nor the gas is allowed to escape. It is important for the level of liquid 210 to be above inlet 236 to maximize the re-circulation of reactive gas 240.

As the reaction proceeds, the reactive gas is substantially consumed. This results in a drop in pressure within the substantially closed reaction vessel. An additional amount of gas may be manually added to reaction vessel at this point. Alternatively, a controller 255 may be provided which detects the drop in pressure, provides for an additional amount of the reactive gas to be inserted into the reaction vessel and the vessel is sealed again. The controller may be programmed such that the gas is provided on demand due to the pressure of the vessel dropping below a predetermined threshold. The controller could also provide the inert gas as needed during the course of the reaction.

Preferably, the baffle utilized in the reactor of the present may float atop the liquid or may be fixed adjacent the top of the liquid level. Preferably, the baffle has a series of apertures incorporated therein. These apertures allow any by-product gas formed by the reaction and any unreacted gas to escape from the reaction zone into the headspace. Any unreacted gas would bubble back up to the headspace through the baffle apertures and re-ingested into the reaction zone by the suctioning created during agitation. In the embodiment shown in Fig 1, the reactive gas which has escaped into the headspace 125 would be drawn back into liquid 110 by the suctioning created by the downward vortex of agitator 133. In the embodiment shown in Fig. 2, where eductor tubes 250 are utilized for recirculation, the reactive gas is drawn through hollow shaft 235 and back into the reaction zone 215 through eductor tubes 250.

Fig. 3 illustrates a preferred embodiment of a baffle 18A which maybe used to practice the present invention. Baffle 18A has a series of apertures 385, although only a single aperture, e.g. annular shaped baffle, may be utilized as in Fig. 1. Preferably, baffle 18A floats on the surface of the liquid within a reaction vessel such that a varying liquid level may be accommodated. Fig. 4 illustrates a baffle 18B comprising two layers, the layer below shown in phantom lines, disposed over each other. Upon sliding rotation of the two layers, the apertures 485 may vary in size.

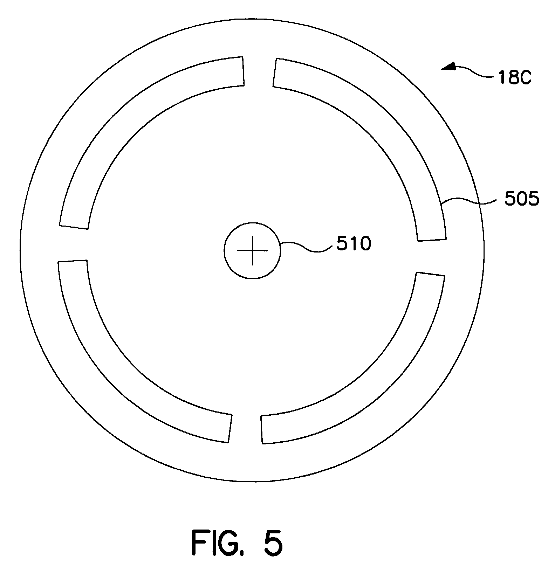

Fig. 5 illustrates yet another embodiment, baffle 18C, wherein the apertures comprise concentric openings 505 with aperture 510 providing an opening for the impeller shaft.

The baffle is also adapted to reduce the formation of mist in the headspace of the reaction vessel during agitation of the liquid. The reduction of mist in the headspace decreases the likelihood of explosion for a flammable or reactive liquid/gas combination such as an organic liquid with oxygen particularly where the flash point of the liquid is above the operating temperature of the reaction. When using a low vapor pressure liquid, the mist is the only explosion risk. However, with a high vapor pressure liquid, the vapor concentration may become flammable even without a mist. The explosion risk is further increased when using a highly explosive gas such as oxygen or hydrogen. The reduction in mist formation by the baffle in the headspace decreases the need for providing an inert atmosphere with a gas, such as nitrogen, in the headspace while also decreasing the amount of reactive gas which may escape into the headspace.

Depending on the reaction desired, typical gases include air, oxygen, hydrogen, hydrogen halides, carbon monoxide, carbon dioxide, ammonia, bromine, chlorine, iodine, fluorine, steam, water vapor, oxides of nitrogen, oxides of sulfur, and mixtures thereof. In an oxidation reaction, it is preferable to use oxygen rather than air when practicing the instant invention. The high gas utilization of the present invention substantially reduces any explosion risk since mist formation is suppressed and very little oxygen remains in the headspace or may be inerted with a relatively small volume of inert gas such as nitrogen. For example, an inert atmosphere may be created in the headspace by purging and filling with an inert gas such as nitrogen, argon or helium. Since the present invention allows very little, if any, gas to escape to the headspace, only a small amount of inert gas would be required. The apparatus could be run without an inert gas purge if the liquid vapor pressure were below the explosion limit. Where the eductor tubes are utilized for re-circulation of the reactive gas, the baffle may not be necessary where mist explosions are prevented by the amount of inert gas present in the headspace. The inert gas could also be provided on an as-needed basis during the course of the reaction.

As the reaction proceeds, the reactive gas is substantially consumed. This results in a drop in pressure within the substantially closed reaction vessel. An additional amount of gas may be manually added to reaction vessel at this point. Alternatively, a controller 255 may be provided which detects the drop in pressure, provides for an additional amount of the reactive gas to be inserted into the reaction vessel and the vessel is sealed again. The controller may be programmed such that the gas is provided on demand due to the pressure of the vessel dropping below a predetermined threshold. The controller could also provide the inert gas as needed during the course of the reaction.

Upon substantial completion of the reaction, the reaction vessel is vented preferably into a holding tank for subsequent treatment of the waste gas. Given the high utilization of the reactive gas during the reaction, there typically would be an insignificant amount of reactive gas vented. Again, such low levels of the waste gas may permit accumulation of the waste gas for more economical waste treatment. The reduction in mist formation by using the baffle also reduces the amount of solvent vapor in the waste gas.

The present invention achieves the objects recited above. The process of the present invention provides a method of utilizing substantially all of the reactive gas in a liquid-gas reaction such that continuous venting is unnecessary. The absence of the need for continuous venting allows more economical waste treatment since there is little unreacted gas remaining in the reaction vessel. The apparatus of the present invention employs a combination of eductor tubes incorporated with the hollow shaft of the impeller along with a baffle having one or more apertures to provide an increase in the re-circulation of the gas used in a liquid-gas reaction.

While the present invention has been particularly described, in conjunction with a specific preferred embodiment, it is evident that many alternatives, modifications and variations will be apparent to those skilled in the art in light of the foregoing description. It is therefore contemplated that the appended claims will embrace any such alternatives, modifications and variations as falling within the true scope and spirit of the present invention.

Thus, having described the invention, what is claimed is:

## Claims

1. A batch liquid-gas reaction process comprising the steps of:
(a) providing a desired amount of liquid into a reaction vessel;
(b) providing a fixed amount of gas into the reaction vessel; and
(c) agitating said liquid in a substantially closed process such that said gas and said liquid are in intimate contact for substantial reaction to occur without venting said gas during the process.

2. The process of claim 1 wherein step (b) comprises providing a fixed amount of a gas selected from the group consisting of air, oxygen, hydrogen, hydrogen halides, carbon monoxide, carbon dioxide, ammonia, bromine, chlorine, iodine, fluorine, steam, water vapor, oxides of nitrogen and oxides of sulfur and mixtures thereof into the reaction vessel.

3. The process of claim 1 further including the step (d) of providing an amount of inert gas into the reaction vessel to provide an inert atmosphere above said liquid.

4. The method of claim 1 further including the steps of opening the reaction vessel, providing an additional amount of said gas during step (c), and continuing the substantially closed process.

5. A batch reactor for liquid-gas reactions comprising:
a vessel having an opening for introducing and removing a liquid and a gas;
an agitator within said vessel adapted to intimately mix a liquid and a gas introduced into said vessel; and
a baffle having at least one aperture disposed over said agitator within said vessel, said baffle adapted to allow gas ingestion directly from a head space above a liquid level in said vessel and re-circulation of any unreacted gas or a by-product gas formed during a liquid-gas reaction process.

6. The batch reactor of claim 5 wherein said baffle is adapted to prevent mist formation during a liquid-gas reaction.

7. The batch reactor of claim 5 wherein said baffle is either fixedly mounted over said agitator within said vessel, or is adapted to float on a surface of a liquid-gas reaction mixture within said vessel.

8. The batch reactor of claim 5 further including a holding tank for waste gas vented from said vessel after a batch liquid-gas reaction, said holding tank adapted to store the waste gas for further processing.

9. An apparatus for liquid-gas reactions comprising:
a vessel having an opening for introducing and removing a liquid and a gas;
a hollow shaft extending into said vessel having an inlet located adjacent a top portion of said vessel, the inlet adapted to be above a liquid level during the liquid-gas reaction;
an agitator within said vessel for intimately mixing a liquid and a gas, said agitator attached to an end of said hollow shaft opposite the inlet;
one or more eductor tubes extending from said hollow shaft adjacent said agitator; and
a baffle disposed over said agitator in said vessel adjacent said hollow shaft such that during a liquid-gas reaction any unreacted gas or by-product gas escaping through said baffle into a headspace of said vessel above a liquid is re-circulated during agitation of said agitator through the inlet of said hollow shaft and out through said eductor tubes to react with the liquid.

10. The apparatus of claim 9 wherein said baffle has either (a) one or more apertures or (b) variable openings on a surface of said baffle, or (c) both.
